# EUROPEAN PATENT SPECIFICATION

(11) **EP 3 940 376 B1**
(45) Date of publication and mention of the grant of the patent: **11.03.2026**
(21) Application number: 19928512.3
(22) Date of filing: 06.12.2019
(51) Int. Cl.: G01N 23/20025, H01M 10/42

(54) **STAGE DEVICE FOR XRD MEASUREMENT OF BATTERY**
STUFENVORRICHTUNG ZUR XRD-MESSUNG EINER BATTERIE
DISPOSITIF À PLATEAU POUR MESURE PAR DIFFRACTION PAR RAYON X D'UNE BATTERIE

(30) Priority: 15.05.2019 KR 20190056809
(43) Date of publication of application: 19.01.2022
(73) Proprietor: LG CHEM, LTD., Yeongdeungpo-gu, Seoul 07336 (KR)
(72) Inventor: KIM, So Young, Daejeon 34122 (KR); KOO, Japil, Daejeon 34122 (KR)
(74) Representative: Goddar, Heinz J.
(86) International application number: PCT/KR2019/017143
(87) International publication number: WO 2020/230971

(56) References cited:
- CN-B- 106 645 238
- JP-A- 2016 170 093
- JP-A- 2018 049 002
- JP-A- 2018 112 421
- KR-A- 20150 115 421
- KR-B1- 100 809 951
- KR-B1- 101 274 730
- KR-B1- 101 609 443
- KR-B1- 101 829 599
- KR-U- 20120 005 349
- US-A1- 2017 141 443

## Description

### TECHNICAL FIELD

This application claims the benefit of priority to Korean Patent Application No. 10-2019-0056809 filed on May 15, 2019.

The present invention relates to a stage apparatus for fixing a battery used in XRD (x-ray diffraction) measurement, and more particularly, to a stage apparatus for XRD measurement of a battery for measuring each part of the battery without a significant change in measurement situation.

### BACKGROUND

In general, a secondary battery is a battery that can be used repetitively through a discharging process for converting chemical energy into electrical energy and a reverse charging process, and types of such secondary batteries include nickel-cadmium (Ni-Cd) batteries, nickel-metal hydride (Ni-MH) batteries, lithium-metal batteries, lithium-ion (Li-ion) batteries, and lithium-ion polymer batteries (Li-ion Polymer Battery). Among these secondary batteries, lithium secondary batteries have been commercialized and widely used because they have high energy density and voltage, a long cycle-life, and a low self-discharge rate.

Active materials in a battery are materials that actually participate in the reactions at battery electrodes, and the performance of a battery, such as battery capacity and voltage, or the like, may be determined by the performance of the active materials. Therefore, it is important to analyze the active materials in a battery to interpret the performance of the battery.

Various measurement techniques are used to analyze the electrode structure of an actual battery according to battery operation. An XRD (x-ray diffraction) method is used as one of the methods for obtaining the information on the entirety of an actual battery.

Korean Patent Registration No. 10-1274730 discloses a technique for "In-situ Battery Frame Capable of X-ray Diffraction Analysis."
CN 106 645 238 B describes a device for layer-by-layer analysis of corrosion products based on an X-ray diffractometer.
The invention is defined in independent claim 1. Embodiments of the invention are defined in the dependent claims.

### SUMMARY OF INVENTION

### TECHINCL OBJECTS

It is an object of the present invention to provide a stage apparatus for fixing a battery used in XRD (x-ray diffraction) measurement, and more particularly, to provide a stage apparatus for XRD measurement of a battery for measuring each part of the battery without a significant change in measurement situation.

The objects sought to be achieved by the present invention are not limited to those described above, and other objects that have not been mentioned above will be clearly understood by those having ordinary skill in the art to which the present invention pertains from the following description.

### TECHNICAL SOLUTION

A stage apparatus for XRD measurement of a battery in accordance with the present invention may comprise: a placement plate to which a battery is fixed and to which an x-ray beam is irradiated; a driving unit configured to provide linear driving power to the placement plate so as to move the placement plate in a first direction that is parallel to a face of the placement plate; a guide unit configured to guide movement of the placement plate; and a fixation unit configured to fix the driving unit and the guide unit in position.

### EFFECTS OF THE INVENTION

The stage apparatus for XRD measurement of a battery in accordance with the present invention can be mounted on a sample stage so as to stably fix the battery.

The stage apparatus for XRD measurement of a battery in accordance with the present invention can accurately change the position of the battery within the sample stage and can have high reproducibility even in repetitive measurements. In addition, by being mounted in position on the sample stage at all times, further alignment of the sample is not necessary.

The stage apparatus for XRD measurement of a battery in accordance with the present invention can reduce measurement errors even for the battery having a flexible external shape, such as a pouch-type battery, by making the shape of the battery remain unchanged by a placement plate.

### BRIEF DESCRIPTION OF THE DRAWINGS

Fig. 1 is a conceptual diagram showing an XRD measurement system to which a stage apparatus for XRD measurement of a battery in accordance with the present invention is applied;
Fig. 2 is a perspective view showing a stage apparatus for XRD measurement of a battery in accordance with the present invention;
Fig. 3 is a front view showing the stage apparatus for XRD measurement of a battery in accordance with the present invention;
Fig. 4 is a plan view showing a guide unit;
Fig. 5 is a perspective view showing a placement plate; and
Fig. 6 is a plan view showing a fixation plate.

### DETAILED DESCRIPTION OF EMBODIMENTS

A stage apparatus for XRD measurement of a battery in accordance with the present invention does comprise: a placement plate to which a battery is fixed and to which an x-ray beam is irradiated; a driving unit configured to provide linear driving power to the placement plate so as to move the placement plate in a first direction that is parallel to a face of the placement plate; a guide unit configured to guide movement of the placement plate; and a fixation unit configured to fix the driving unit and the guide unit in position.

In the stage apparatus for XRD measurement of a battery in accordance with the present invention, the x-ray beam is irradiated from an x-ray beam source to the face of the placement plate, and the x-ray beam passes through the placement plate and is incident on an x-ray receiving unit, and the placement plate may be made of a material that transmits electromagnetic waves of 0.01 to 10 nm and may comprise one or more of acrylic resins, polycarbonate, ABS, polystyrene, and styrene acrylonitrile (SAN) resins.

In the stage apparatus for XRD measurement of a battery in accordance with the present invention, the driving unit does comprise a driver part configured to output the linear driving power, and a power transmission part connected between the driver part and the placement plate and configured to transmit the linear driving power outputted from the driver part to the placement plate.

In the stage apparatus for XRD measurement of a battery in accordance with the present invention, the power transmission part may be of a bar shape extending in the first direction, one end of the power transmission part may be connected to the placement plate and the other end thereof may be connected to the driver part, and the driver part may push or pull the power transmission part in the first direction at the other end of the power transmission part so as to move the placement plate.

In the stage apparatus for XRD measurement of a battery in accordance with the present invention, a movement range within which the driver part causes the placement plate to move may be 0 mm to 50 mm, and the driver part may measure a moving distance of the placement plate through an electronic scale.

In the stage apparatus for XRD measurement of a battery in accordance with the present invention, the guide unit may comprise a guide bar extending in the first direction, and a guide part fastened to the placement plate and coupled to the guide bar so as to slide in the longitudinal direction of the guide bar.

In the stage apparatus for XRD measurement of a battery in accordance with the present invention, the placement plate is formed by stacking a first placement plate and a second placement plate, the battery is placed between the first placement plate and the second placement plate, and the guide part is connected to one face of the first placement plate and the driver part is connected to the other face of the first placement plate.

In the stage apparatus for XRD measurement of a battery in accordance with the present invention, a first hole may be formed in the first placement plate and a second hole may be formed in the second placement plate, and entrances of the first hole and the second hole may face each other.

In the stage apparatus for XRD measurement of a battery in accordance with the present invention, the first placement plate and the second placement plate may comprise fastening means configured to fasten the battery with the battery sandwiched therebetween, the fastening means may comprise fastening bolts, and fastening holes which are provided in the first placement plate and the second placement plate and into which the fastening bolts are to be inserted, the fastening holes may be provided in plural, respectively, in the first placement plate and the second placement plate, and the first placement plate and the second placement plate may be fastened to each other by the fastening means at two or more points.

In the stage apparatus for XRD measurement of a battery in accordance with the present invention, the fixation unit may comprise a base plate on which the placement plate and the driving unit are disposed, and a fixation plate which is fixed to an upper face of the base plate and to which the guide bar and the driving unit are fixed.

In the stage apparatus for XRD measurement of a battery in accordance with the present invention, the guide part may be coupled to a top portion of the placement plate.

In the stage apparatus for XRD measurement of a battery in accordance with the present invention, alignment holes may be formed in the base plate passing therethrough, and the alignment holes may be provided in plural.

In the stage apparatus for XRD measurement of a battery in accordance with the present invention, the fixation plate may comprise a first fixation plate coupled to the base plate in parallel with the first direction, and a second fixation plate coupled to the base plate perpendicularly to the first direction, and the guide bar may be fixed to the first fixation plate, and the driving unit may be fixed to the second fixation plate.

In the stage apparatus for XRD measurement of a battery in accordance with the present invention, the driving unit may be fixed to one face of the second fixation plate, the placement plate may be located on the other face of the second fixation plate facing the one face of the second fixation plate, and the driving unit may transmit the driving power to the placement plate through an opening formed in the second fixation plate.

### EMBODIMENTS

Hereinafter, embodiments in accordance with the present invention will be described in greater detail with reference to the accompanying drawings. During this course of description, the sizes or shapes of the components shown in the drawings may not be made to scale for clarity and convenience of description. In addition, terms that are specifically defined in consideration of the construction and operation of the present invention may vary depending on the convention or intention of a user or operator. Definitions of these terms should be made based on the overall contents of the present disclosure.

In the description of the present invention, it should be noted that the orientation or positional relationship indicated by the terms "central," "up," "down," "left," "right," "vertical," "horizontal," "inward," "outward," etc. are based on the orientation or positional relationship shown in the drawings, or the orientation or positional relationship that is normally given when using the product of the present invention, and are only for the purpose of explanation and brief description of the invention, and that it is not intended to present or suggest that the apparatus or elements shown must have a specific orientation and be constructed or operated in the specific orientation, and accordingly, it should not be understood to limit the present invention.

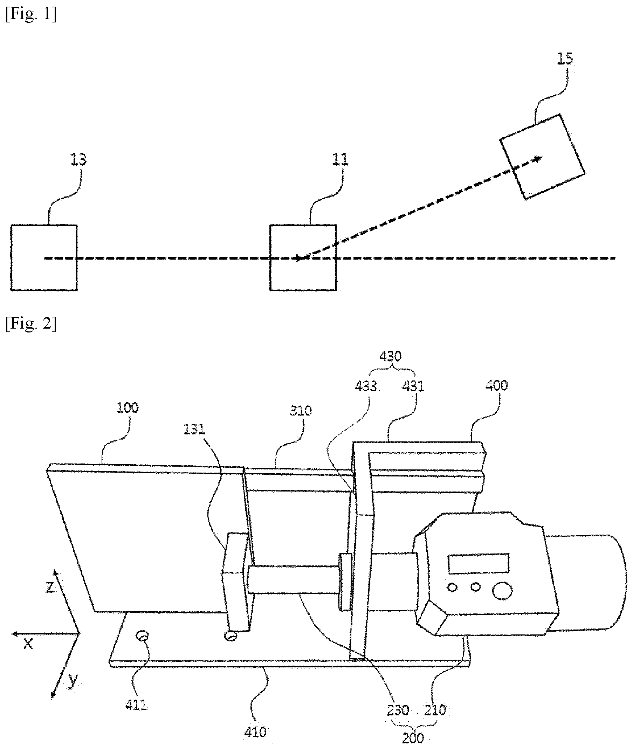

Hereinafter, the construction and features of a stage apparatus for XRD measurement of a battery in accordance with the present invention will be described in detail, with reference to Figs. 1 to 6.

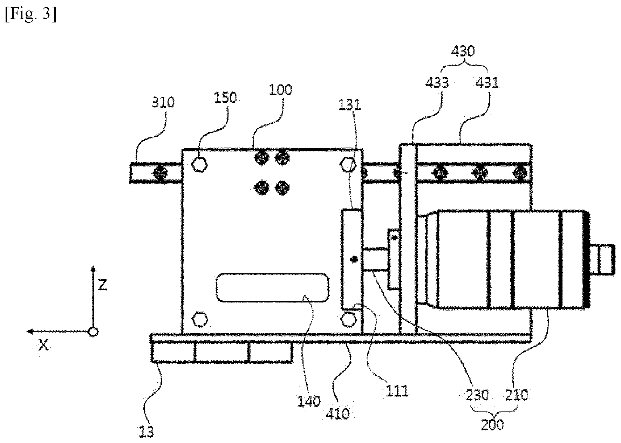

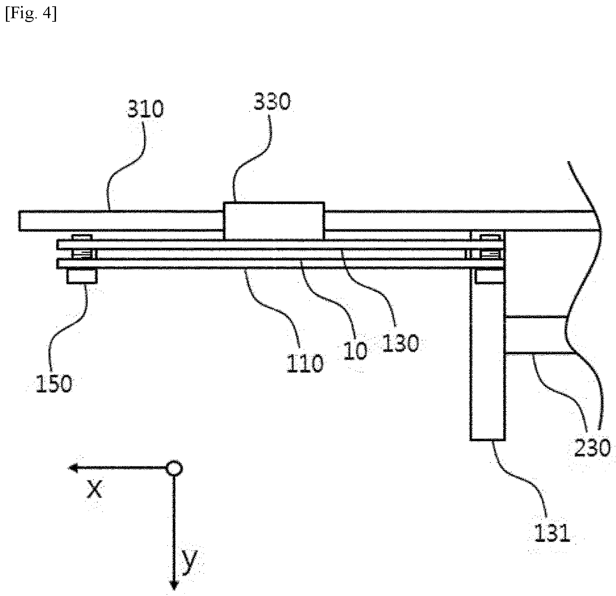

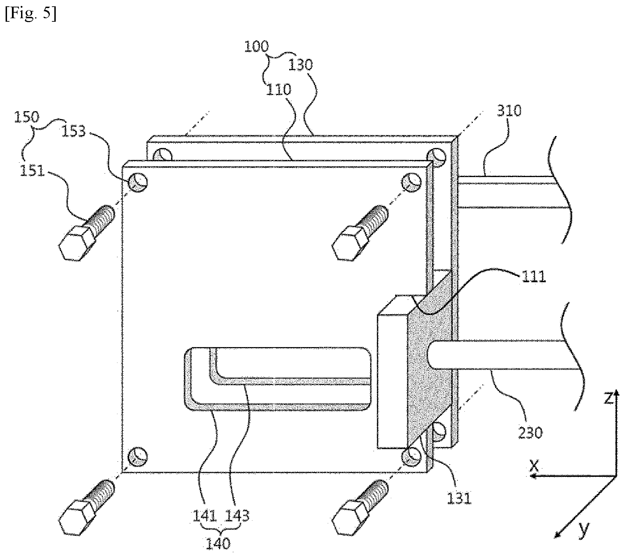

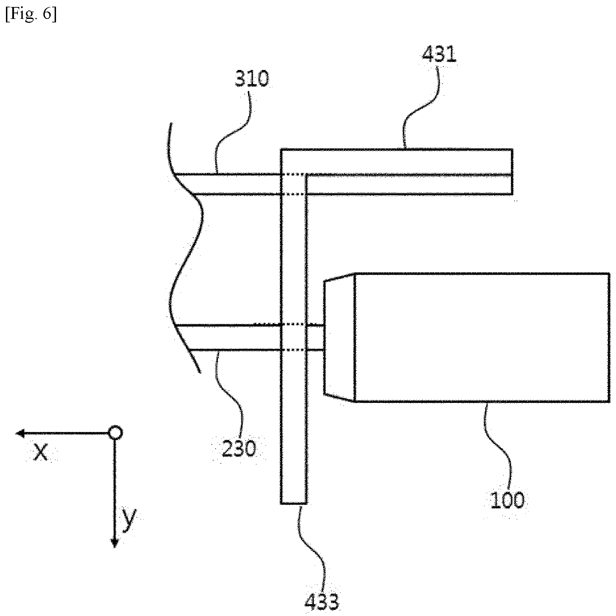

Fig. 1 is a conceptual diagram showing an XRD measurement system to which a stage apparatus for XRD measurement of a battery in accordance with the present invention is applied. Fig. 2 is a perspective view showing the stage apparatus for XRD measurement of a battery in accordance with the present invention. Fig. 3 is a front view showing the stage apparatus for XRD measurement of a battery in accordance with the present invention. Fig. 4 is a plan view showing a guide unit 300. Fig. 5 is a perspective view showing a placement plate 100. Fig. 6 is a plan view showing a fixation plate 430.

XRD measurements may be performed for each part of a battery 10 in order to check the charge/discharge behavior of the battery 10 or the degree of non-uniformity in the battery 10 in situ. As shown in Fig. 1, the XRD measurements may be performed by irradiating an x-ray beam to the battery 10 disposed on a sample stage 13 with an x-ray beam source 11 and by receiving at an x-ray receiving unit 15 the beam that has passed through the battery 10. In this case, it may be necessary to measure while moving the battery 10 little by little within the sample stage 13 for the measurement of each part of the battery 10. If the movement of the battery 10 is not accurate, errors may occur in the measurement of non-uniformity in the battery 10, and reproducibility may be deteriorated in repetitive measurements. In particular, in the case of the battery 10 having a flexible external shape as in a pouch-type, it may be difficult to measure while changing the position of the battery 10, and, at the same time, maintaining the shape of the battery 10 at the time of initial measurement.

The stage apparatus for XRD measurement of a battery in accordance with the present invention may be mounted on the sample stage 13 so as to stably fix the battery 10.

The stage apparatus for XRD measurement of a battery in accordance with the present invention can accurately change the position of the battery 10 within the sample stage 13 and can have high reproducibility even in repetitive measurements. In addition, by being mounted in position on the sample stage 13 at all times, further alignment of the sample is not necessary.

As shown in Figs. 2 and 3, the stage apparatus for XRD measurement of a battery in accordance with the present invention may comprise a placement plate 100 to which the battery 10 is fixed and to which an x-ray beam is irradiated, a driving unit 200 configured to provide linear driving power to the placement plate 100 so as to move the placement plate 100 in a first direction that is parallel to a face of the placement plate 100, a guide unit 300 configured to guide the movement of the placement plate 100, and a fixation unit 400 configured to fix the driving unit 200 and the guide unit 300 in position.

The first direction may be the x-axis direction shown in Figs. 2 and 3. In other words, the stage apparatus for XRD measurement of the battery in accordance with the present invention can linearly move the battery 10 along one axis, and can measure the characteristics of each part of the battery 10 on the x-axis.

The x-ray beam may be irradiated from the x-ray beam source 11 to the face of the placement plate 100, and the x-ray beam may pass through the placement plate 100 and be incident on the x-ray receiving unit 15. The placement plate 100 and the battery 10 may be located on the optical path of the x-ray beam, and the x-ray beam can pass through the placement plate 100 and the battery 10 at the same time. The placement plate 100 may be made of a material having a low electron density, and may transmit x-ray beams at a thickness level of several cm. That is, the placement plate 100 may be made of a material that transmits electromagnetic waves of 0.01 to 10 nm, and may include one or more of acrylic resins, polycarbonate, ABS, polystyrene, and styrene acrylonitrile (SAN) resins.

As shown in Fig. 4, the placement plate 100 may be formed by stacking a first placement plate 130 and a second placement plate 110, and the battery 10 may be placed between the first placement plate 130 and the second placement plate 110. The first placement plate 130 and the second placement plate 110 may be made of a material that permits transmission of x-ray beams and at the same time of a rigid material, and the first placement plate 130 and the second placement plate 110 may make contact with and press both faces of the battery 10 therebetween, so as to fix the battery 10 on the placement plate 100. Therefore, the stage apparatus for XRD measurement of the battery in accordance with the present can reduce measurement errors even for the battery 10 having a flexible external shape, such as a pouch-type battery 10 by making the shape of the battery 10 remain unchanged by the placement plate 100.

In addition, since all the surfaces except for the faces of the battery that are in contact with the first placement plate 130 and the second placement plate 110 are exposed to the outside, it may be easy to connect additional devices for charging and discharging, or the like.

As shown in Fig. 5, the placement plate 100 may have a window 140 formed therein through which the x-ray beam can pass. The window 140 may be a hole formed in a portion through which the x-ray beam passes on the placement plate 100. Though the placement plate 100 may be made of a transparent material that can transmit x-ray beams, a hole may be formed in a portion of the placement plate 100 to further promote smooth transmission of the x-ray beams, so as to improve the accuracy of the analysis.

Specifically, the window 140 may be formed by a first hole 143 formed in the first placement plate 130 and a second hole 141 formed in the second placement plate 110. The first hole 143 may be formed at a distance of 10 mm to 20 mm from the lower end of the first placement plate 130 and may be formed as a long hole so that the longitudinal direction of the entrance of the hole is parallel to the first direction, and the width of the entrance of the first hole 143 may be formed to be 10 mm to 20 mm. The second hole 141 may be formed at a distance of 10 mm to 20 mm from the lower end of the second placement plate 110 and may be formed as a long hole so that the longitudinal direction of the entrance of hole is parallel to the first direction, and the width of the entrance of the second hole 141 may be formed to be 10 mm to 20 mm. The first hole 143 and the second hole 141 may be located on the optical path of the x-ray beam, and the entrances of the first hole 143 and the second hole 141 may be formed at positions facing each other.

The first placement plate 130 and the second placement plate 110 may be stacked each other with the battery 10 sandwiched therebetween, and then fastened to each other with fastening means 150 such as a clip.

For example, the fastening means 150 may comprise fastening bolts 151, and fastening holes 153 provided in the first placement plate 130 and the second placement plate 110 for the fastening bolts 151 to be inserted. The fastening bolts 151 may be fastened to the fastening holes 153 through thread coupling.

The fastening holes 153 may be provided in plural and may fasten the first placement plate and the second placement plate to each other at two or more points, so as to prevent the first placement plate and the second placement plate from twisting each other when they are coupled in an accurate position. The accurate position may refer to a state in which the first placement plate and the second placement plate are coupled so that the entrances of the first hole 143 and the second hole 141 face each other.

The driving unit 200 may comprise a driver part 210 configured to output the linear driving power, and a power transmission part 230 connected between the driver part 210 and the placement plate 100 and configured to transmit the linear driving power outputted from the driver part 210 to the placement plate 100.

The driver part 210 may be a linear transfer device, the movement range within which the placement plate 100 is caused to move may be 0 mm to 50 mm, and the driver part 210 may measure a moving distance through an electronic scale. The housing of the driver part 210 may be provided with a display for displaying the current operating state of the driver part 210 and a button for inputting control input values for the driver part 210.

The driver part 210 may be an apparatus that is precisely controllable to ensure the reproducibility of the measurements when repetitively measuring the same position. For example, the driver part 210 may measure each position of the battery 10 with specified condition values with respect to an analysis condition such as voltage, temperature, or the like and then may measure with different condition values the same positions as the respective positions of the battery 10 that were measured with the previous condition values.

The power transmission part 230 may be of a bar shape extending in the first direction, one end of the power transmission part 230 may be connected to the placement plate 100 and the other end thereof may be connected to the driver part 210, and the driver part 210 may push or pull the power transmission part 230 in the first direction at the other end of the power transmission part 230 so as to move the placement plate 100.

The guide unit 300 may comprise a guide bar 310 extending in the first direction, and a guide part 330 fastened to the placement plate 100 and coupled to the guide bar 310 so as to slide in the longitudinal direction of the guide bar 310. That is, the guide part 330 may move on the guide bar 310 by way of a rail.

As shown in Fig. 4, the guide part 330 may be connected to one face of the first placement plate 130, and the driver part 210 may be connected to the other face of the first placement plate 130. Specifically, the guide part 330 may be connected to the face of the first placement plate 130 on the other face facing the face of the first placement plate 130 in contact with the battery 10, and the driver part 210 may be connected to the face of the first placement plate 130 in contact with the battery 10. That is, the guide part 330 and the driver part 210 may be connected, respectively, to two faces of the first placement plate 130. By placing two support points for supporting the first placement plate 130 on two different faces, respectively, it is possible to prevent the load of the apparatus from being concentrated on one point. Specifically, an protrusion 131, extending in a direction perpendicular to the face of the first placement plate 130 facing the battery, may be formed on the first placement plate 130, and the driver part 210 may be connected to the protrusion 131. The load of the apparatus may be further distributed by further separating the distance between the two support points by way of the protrusion 131.

An insertion recess 111 into which the protrusion 131 is fitted may be formed at one edge of the second placement plate 110. By providing the insertion recess 111 in the second placement plate 110, it is possible to prevent the coupling of the first placement plate 130 and the second placement plate 110 from being interfered with by being caught by the protrusion 131 when they are stacked on each other and coupled.

The fixation unit 400 may comprise a base plate 410 on which the placement plate 100 and the driving unit 200 are disposed, and a fixation plate 430 which is fixed to an upper face of the base plate 410 and to which the guide bar 310 and the driving unit 200 are fixed.

As shown in Fig. 3, the base plate 410 may be coupled to an upper portion of the sample stage 13. An optical path of the x-ray beam may pass through the sample stage 13, and accordingly, the base plate 410 may be disposed on the sample stage 13 so that the x-ray beam may be irradiated to the placement plate 100, and the placement plate 100 may be disposed on the base plate 410. In this case, the guide part 330 may be coupled to a top portion of the placement plate 100. Constituents capable of blocking x-ray beams, such as the guide part 330 and the guide bar 310, may be placed at the top portion of the placement plate 100, so that the battery 10 may be positioned from the lowest position possible.

Alignment holes 411, passing through the upper and lower faces of the base plate 410, may be formed in the base plate 410, and the alignment holes 411 may be provided in plural. The sample stage 13 may be provided with holes for fixing the apparatus. The alignment holes 411 may be formed at positions on the base plate 410 on which the placement plate 100 may be located on the optical path of the x-ray beam. When fastening the stage apparatus for XRD measurement of the battery in accordance with the present invention to the sample stage 13, the alignment holes 411 and the holes of the sample stage 13 may be aligned, and then the apparatus may be fastened by thread coupling. Therefore, the battery 10 can be readily aligned in position by aligning the alignment holes 411 and the holes in the sample stage 13.

As shown in Fig. 6, the fixation plate 430 may comprise a first fixation plate 431 coupled to the base plate 410 in parallel with the first direction, and a second fixation plate 433 coupled to the base plate 410 perpendicularly to the first direction. That is, the 'L-shaped' fixation plate 430 may be coupled on the base plate 410.

The guide bar 310 may be fixed to the first fixation plate 431, and the driving unit 200 may be fixed to the second fixation plate 433.

Because the guide bar 310 is coupled in parallel with the face of the first fixation plate 431, the guide bar 310 may be stably fixed by adjusting the length of the guide bar 310 to be fixed.

The driving unit 200 may be fixed to one face of the second fixation plate 433, the placement plate 100 may be located on the other face of the second fixation plate 433 facing the one face of the second fixation plate 433, and the driving unit 200 may transmit the driving power to the placement plate 100 through an opening formed in the second fixation plate 433. Specifically, the power transmission part 230 may pass through the opening formed in the second fixation plate 433. By adjusting the diameter of the opening, it is possible to suppress errors and vibrations in the y-axis and z-axis resulting from the shaking of the apparatus.

While the embodiments in accordance with the present invention have been described above, they are only for illustration and those having ordinary skill in the art to which the present invention pertains will appreciate that various modifications and equivalent embodiments can be made therefrom. Therefore, the scope of the true technical protection of the present invention should be defined by the following claims.

### INDUSTRICAL APPLICABILITY

The stage apparatus for XRD measurement of a battery in accordance with the present invention can be mounted on the sample stage so as to stably fix the battery.

The stage apparatus for XRD measurement of a battery in accordance with the present invention can accurately change the position of the battery within the sample stage and can have high reproducibility even in repetitive measurements. In addition, by being mounted in position on the sample stage at all times, further alignment of the sample is not necessary.

The stage apparatus for XRD measurement of a battery in accordance with the present invention can reduce measurement errors even for the battery having a flexible external shape, such as a pouch-type battery, by making the shape of the battery remain unchanged by the placement plate.

## Claims

1. A stage apparatus for XRD measurement of a battery, comprising:
a placement plate (100) for fixing a battery (10),
wherein the placement plate (100) is configured to allow an x-ray beam to pass through the placement plate (100) and the battery (10);
a driving unit (200) configured to provide linear driving power to the placement plate (100) so as to move the placement plate (100) in a first direction that is parallel to a face of the placement plate (100),
wherein the driving unit (200) comprises:
a driver part (210) configured to output the linear driving power; and
a power transmission part (230) connected between the driver part (210) and the placement plate (100) and configured to transmit the linear driving power outputted from the driver part (210) to the placement plate (100);
a guide unit (300) configured to guide movement of the placement plate (100),
wherein the guide unit (300) comprises:
a guide bar (310) extending in the first direction; and
a guide part (330) fastened to the placement plate (100) and coupled to the guide bar (310) so as to slide in the longitudinal direction of the guide bar (310), and
wherein the placement plate (100) is formed by stacking a first placement plate (130) and a second placement plate (110),
wherein the placement plate is configured to allow the battery (10) to be placed between the first placement plate (130) and the second placement plate (110), and
the guide part (330) is connected to one face of the first placement plate (130) and the driver part (210) is connected to the other face of the first placement plate (130); and
a fixation unit (400) configured to fix the driving unit (200) and the guide unit (300) in position.

2. The stage apparatus for XRD measurement of a battery of claim 1,
wherein the face of the placement plate (100) where the x-ray beam is irradiated from an x-ray beam source, passes through the placement plate (100) and the battery (10), and is incident on an x-ray receiving unit, and
wherein the placement plate (100) is made of a material that transmits electromagnetic waves of 0.01 to 10 nm, and comprises one or more of acrylic resins, polycarbonate, ABS, polystyrene, and styrene acrylonitrile (SAN) resins.

3. The stage apparatus for XRD measurement of a battery of claim 1,
wherein the power transmission part (230) is of a bar shape extending in the first direction,
one end of the power transmission part (230) is connected to the placement plate (100) and the other end thereof is connected to the driver part (210), and
the driver part (210) pushes or pulls the power transmission part (230) in the first direction at the other end of the power transmission part (230) so as to move the placement plate (100).

4. The stage apparatus for XRD measurement of a battery of claim 3,
wherein a movement range within which the driver part (210) causes the placement plate (100) to move is 0 mm to 50 mm, and
the driver part (210) measures a moving distance of the placement plate (100) through an electronic scale.

5. The stage apparatus for XRD measurement of a battery of claim 1,
wherein a first hole (143) is formed in the first placement plate (130) and a second hole (141) is formed in the second placement plate (110), and
entrances of the first hole (143) and the second hole (141) face each other.

6. The stage apparatus for XRD measurement of a battery of claim 5,
wherein the first placement plate (130) and the second placement plate (110) comprise fastening means (150) configured to fasten the battery (10) with the battery (10) sandwiched therebetween,
the fastening means (150) comprise fastening bolts (151), and fastening holes (153) which are provided in the first placement plate (130) and the second placement plate (110) and into which the fastening bolts (151) are to be inserted,
the fastening holes (153) are provided in plural, respectively, in the first placement plate (130) and the second placement plate (110), and
the first placement plate (130) and the second placement plate (110) are fastened to each other by the fastening means (150) at two or more points.

7. The stage apparatus for XRD measurement of a battery of claim 1,
wherein the fixation unit (400) comprises:
a base plate (410) on which the placement plate (100) and the driving unit (200) are disposed; and
a fixation plate (430) which is fixed to an upper face of the base plate (410) and to which the guide bar (310) and the driving unit (200) are fixed.

8. The stage apparatus for XRD measurement of a battery of claim 7,
wherein the guide part (330) is coupled to a top portion of the placement plate (100).

9. The stage apparatus for XRD measurement of a battery of claim 7,
wherein alignment holes (411) are formed in the base plate (410) passing therethrough, and
the alignment holes (411) are provided in plural.

10. The stage apparatus for XRD measurement of a battery of claim 7,
wherein the fixation plate (430) comprises:
a first fixation plate (431) coupled to the base plate (410) in parallel with the first direction; and
a second fixation plate (433) coupled to the base plate (410) perpendicularly to the first direction, and
wherein the guide bar (310) is fixed to the first fixation plate (431), and
the driving unit (200) is fixed to the second fixation plate (433).

11. The stage apparatus for XRD measurement of a battery of claim 10,
wherein the driving unit (200) is fixed to one face of the second fixation plate (433),
the placement plate (100) is located on the other face of the second fixation plate (433) facing the one face of the second fixation plate (433), and
the driving unit (200) transmits the driving power to the placement plate (100) through an opening formed in the second fixation plate (433).

## Patentansprüche

1. Objekttischvorrichtung zur XRD-Messung einer Batterie, aufweisend:
eine Platzierungsplatte (100) zum Befestigen einer Batterie (10),
wobei die Platzierungsplatte (100) konfiguriert ist, zu bewirken, dass ein Röntgenstrahl durch die Platzierungsplatte (110) und die Batterie (10) hindurchgeht;
eine Antriebseinheit (200), die konfiguriert ist, eine lineare Antriebsleistung an der Platzierungsplatte (100) bereitzustellen, um die Platzierungsplatte (100) in einer ersten Richtung zu bewegen, die parallel zu einer Fläche der Platzierungsplatte (100) ist,
wobei die Antriebseinheit (200) aufweist:
ein Antriebsteil (210), das konfiguriert ist, die lineare Antriebsleistung auszugeben; und
ein Leistungsübertragungsteil (230), das zwischen dem Antriebsteil (210) und der Platzierungsplatte (100) verbunden ist und konfiguriert ist, die lineare Antriebsleistung, die von dem Antriebsteil (210) ausgegeben wird, an die Platzierungsplatte (100) zu übertragen;
eine Führungseinheit (300), die konfiguriert ist, eine Bewegung der Platzierungsplatte (100) zu führen,
wobei die Führungseinheit (300) aufweist:
eine Führungsstange (310), die sich in der ersten Richtung erstreckt; und
ein Führungsteil (330), das an der Platzierungsplatte (100) befestigt ist und mit der Führungsstange (310) gekoppelt ist, um in der Längsrichtung der Führungsstange (310) zu gleiten, und
wobei die Platzierungsplatte (100) durch Stapeln einer ersten Platzierungsplatte (130) und einer zweiten Platzierungsplatte (110) gebildet wird,
wobei die Platzierungsplatte konfiguriert ist, zu ermöglichen, dass die Batterie (10) zwischen der ersten Platzierungsplatte (130) und der zweiten Platzierungsplatte (110) platziert wird, und
das Führungsteil (330) mit einer Fläche der ersten Platzierungsplatte (130) verbunden ist und das Antriebsteil (210) mit der anderen Fläche der ersten Platzierungsplatte (130) verbunden ist; und
eine Fixierungseinheit (400), die konfiguriert ist, die Antriebseinheit (200) und die Führungseinheit (300) in Position zu fixieren.

2. Objekttischvorrichtung zur XRD-Messung einer Batterie nach Anspruch 1,
wobei die Fläche der Platzierungsplatte (100), wo der Röntgenstrahl von einer Röntgenstrahlquelle ausgestrahlt wird, durch die Platzierungsplatte (100) und die Batterie (10) hindurchgeht und auf eine Röntgenstrahlempfangseinheit einfällt, und
wobei die Platzierungsplatte (100) aus einem Material hergestellt ist, das elektromagnetische Wellen von 0,01 bis 10 nm durchlässt, und eines oder mehrere von Acrylharzen, Polycarbonat, ABS, Polystyrol und Styrolacrylnitril-Harzen (SAN-Harzen) enthält.

3. Objekttischvorrichtung zur XRD-Messung einer Batterie nach Anspruch 1,
wobei das Leistungsübertragungsteil (230) eine Stangenform aufweist, die sich in der ersten Richtung erstreckt,
ein Ende des Leistungsübertragungsteils (230) mit der Platzierungsplatte (100) verbunden ist und das andere Ende davon mit dem Antriebsteil (210) verbunden ist, und
das Antriebsteil (210) das Leistungsübertragungsteil (230) in der ersten Richtung an dem anderen Ende des Leistungsübertragungsteils (230) drückt oder zieht, um die Platzierungsplatte (100) zu bewegen.

4. Objekttischvorrichtung zur XRD-Messung einer Batterie nach Anspruch 3,
wobei das Antriebsteil (210) bewirkt, dass sich die Platzierungsplatte (100) innerhalb eines Bewegungsbereiches von 0 mm bis 50 mm bewegt, und
das Antriebsteil (210) eine Bewegungsdistanz der Platzierungsplatte (100) durch eine elektronische Skala misst.

5. Objekttischvorrichtung zur XRD-Messung einer Batterie nach Anspruch 1,
wobei ein erstes Loch (143) in der ersten Platzierungsplatte (130) ausgebildet ist und ein zweites Loch (141) in der zweiten Platzierungsplatte (110) ausgebildet ist, und
Eingänge des ersten Lochs (143) und des zweiten Lochs (141) einander zugewandt sind.

6. Objekttischvorrichtung zur XRD-Messung einer Batterie nach Anspruch 5,
wobei die erste Platzierungsplatte (130) und die zweite Platzierungsplatte (110) Befestigungsmittel (150) aufweisen, die konfiguriert sind, um die Batterie (10) zu befestigen, wobei die Batterie (10) dazwischen eingeschlossen ist,
wobei die Befestigungsmittel (150) Befestigungsbolzen (151) und Befestigungslöcher (153) aufweisen, die in der ersten Platzierungsplatte (130) und der zweiten Platzierungsplatte (110) vorgesehen sind und in die die Befestigungsbolzen (151) einzusetzen sind,
wobei die Befestigungslöcher (153) jeweils mehrfach in der ersten Platzierungsplatte (130) und der zweiten Platzierungsplatte (110) vorgesehen sind, und
wobei die erste Platzierungsplatte (130) und die zweite Platzierungsplatte (110) durch die Befestigungsmittel (150) an zwei oder mehr Punkten aneinander befestigt sind.

7. Objekttischvorrichtung zur XRD-Messung einer Batterie nach Anspruch 1,
wobei die Fixierungseinheit (400) aufweist:
eine Basisplatte (410), auf der die Platzierungsplatte (100) und die Antriebseinheit (200) angeordnet sind; und
eine Fixierungsplatte (430), die an einer oberen Fläche der Basisplatte (410) fixiert ist und an der die Führungsstange (310) und die Antriebseinheit (200) fixiert sind.

8. Objekttischvorrichtung zur XRD-Messung einer Batterie nach Anspruch 7,
wobei das Führungsteil (330) mit einem oberen Abschnitt der Platzierungsplatte (100) gekoppelt ist.

9. Objekttischvorrichtung zur XRD-Messung einer Batterie nach Anspruch 7,
wobei Ausrichtungslöcher (411) in der Basisplatte (410) ausgebildet sind, die dadurch hindurchgehen, und
wobei die Ausrichtungslöcher (411) mehrfach vorgesehen sind.

10. Objekttischvorrichtung zur XRD-Messung einer Batterie nach Anspruch 7,
wobei die Fixierungsplatte (430) aufweist:
eine erste Fixierungsplatte (431), die mit der Basisplatte (410) parallel zu der ersten Richtung gekoppelt ist; und
eine zweite Fixierungsplatte (433), die mit der Basisplatte (410) senkrecht zu der ersten Richtung gekoppelt ist, und
wobei die Führungsstange (310) an der ersten Fixierungsplatte (431) fixiert ist, und
die Antriebseinheit (200) an der zweiten Fixierungsplatte (433) fixiert ist.

11. Objekttischvorrichtung zur XRD-Messung einer Batterie nach Anspruch 10,
wobei die Antriebseinheit (200) an einer Fläche der zweiten Fixierungsplatte (433) fixiert ist,
die Platzierungsplatte (100) auf der anderen Fläche der zweiten Fixierungsplatte (433) angeordnet ist, die der einen Fläche der zweiten Fixierungsplatte (433) zugewandt ist, und
die Antriebseinheit (200) die Antriebsleistung an die Platzierungsplatte (100) durch eine Öffnung überträgt, die in der zweiten Fixierungsplatte (433) ausgebildet ist.

## Revendications

1. Appareil à plateau pour réaliser une mesure XRD d'une batterie, comprenant :
un plateau de placement (100) pour la fixation d'une batterie (10), le plateau de placement (100) étant configuré pour permettre à un faisceau à rayons X de passer à travers le plateau de placement (100) et la batterie (10) ;
une unité d'entraînement (200) configurée pour fournir une puissance d'entraînement linéaire au plateau de placement (100) de sorte à déplacer le plateau de placement (100) dans une première direction qui est parallèle à une face du plateau de placement (100),
dans lequel l'unité d'entraînement (200) comprend :
une partie d'organe d'entraînement (210) configurée pour produire la puissance d'entraînement linéaire ; et
une partie de transmission de puissance (230) raccordée entre la partie d'organe d'entraînement (210) et le plateau de placement (100) et configurée pour transmettre la puissance d'entraînement linéaire produite depuis la partie d'organe d'entraînement (210) jusqu'au plateau de placement (100) ;
une unité de guidage (300) configurée pour guider le mouvement du plateau de placement (100),
dans lequel l'unité de guidage (300) comprend :
une barre de guidage (310) s'étendant dans la première direction ; et
une partie de guidage (330) attachée au plateau de placement (100) et couplée à la barre de guidage (310) de sorte à coulisser dans la direction longitudinale de la barre de guidage (310), et
dans lequel le plateau de placement (100) est formé grâce à l'empilement d'un premier plateau de placement (130) et d'un deuxième plateau de placement (110),
dans lequel le plateau de placement est configuré pour permettre à la batterie (10) d'être placée entre le premier plateau de placement (130) et le deuxième plateau de placement (110), et
la partie de guidage (330) est raccordée à une face du premier plateau de placement (130) et la partie d'organe d'entraînement (210) est raccordée à l'autre face du premier plateau de placement (130) ; et
une unité de fixation (400) configurée pour fixer l'unité d'entraînement (200) et l'unité de guidage (300) en position.

2. Appareil à plateau pour réaliser une mesure XRD d'une batterie de la revendication 1,
dans lequel la face du plateau de placement (100) où le faisceau à rayons X est irradié depuis une source de faisceau à rayons X, passe à travers le plateau de placement (100) et la batterie (10), et est incidente sur une unité de réception de rayon X, et
dans lequel le plateau de placement (100) est réalisé en une matière qui transmet les ondes électromagnétiques de 0,01 à 10 nm, et comprend une ou plusieurs substances parmi : résines acryliques, polycarbonate, ABS, polystyrène, et résines de styrène-acrylonitrile (SAN).

3. Appareil à plateau pour réaliser une mesure XRD d'une batterie de la revendication 1,
dans lequel la partie de transmission de puissance (230) a une forme en barre s'étendant dans la première direction,
une extrémité de la partie de transmission de puissance (230) est raccordée au plateau de placement (100) et l'autre extrémité de celle-ci est raccordée à la partie d'organe d'entraînement (210), et
la partie d'organe d'entraînement (210) pousse ou tire la partie de transmission de puissance (230) dans la première direction au niveau de l'autre extrémité de la partie de transmission de puissance (230) de sorte à déplacer le plateau de placement (100).

4. Appareil à plateau pour réaliser une mesure XRD d'une batterie de la revendication 3,
dans lequel une plage de déplacement au sein de laquelle la partie d'entraînement (210) amène le plateau de placement (100) à se déplacer est de 0 mm à 50 mm, et
la partie d'organe d'entraînement (210) mesure une distance de déplacement du plateau de placement (100) par l'intermédiaire d'une échelle électronique.

5. Appareil à plateau pour réaliser une mesure XRD d'une batterie de la revendication 1,
dans lequel un premier trou (143) est formé dans le premier plateau de placement (130) et un deuxième trou (141) est formé dans le deuxième plateau de placement (110), et
les entrées du premier trou (143) et du deuxième trou (141) se font face l'une l'autre.

6. Appareil à plateau pour réaliser une mesure XRD d'une batterie de la revendication 5,
dans lequel le premier plateau de placement (130) et le deuxième plateau de placement (110) comprennent des moyens d'attache (150) configurés pour attacher la batterie (10) alors que la batterie (10) est prise en sandwich entre ceux-ci,
les moyens d'attache (150) comprennent des boulons d'attache (151), et des trous d'attache (153) qui sont prévus dans le premier plateau de placement (130) et le deuxième plateau de placement (110) et dans lesquels les boulons d'attache (151) sont destinés à être insérés,
les trous d'attache (153) sont prévus de manière plurielle, respectivement, dans le premier plateau de placement (130) et le deuxième plateau de placement (110), et
le premier plateau de placement (130) et le deuxième plateau de placement (110) sont attachés l'un à l'autre par les moyens d'attache (150) au niveau de deux ou de plusieurs points.

7. Appareil à plateau pour réaliser une mesure XRD d'une batterie de la revendication 1,
dans lequel l'unité de fixation (400) comprend :
un plateau de base (410) sur lequel le plateau de placement (100) et l'unité d'entraînement (200) sont disposés ; et
un plateau de fixation (430) qui est fixé à une face supérieure du plateau de base (410) et sur lequel la barre de guidage (310) et l'unité d'entraînement (200) sont fixées.

8. Appareil à plateau pour réaliser une mesure XRD d'une batterie de la revendication 7,
dans lequel la partie de guidage (330) est couplée à une portion supérieure du plateau de placement (100).

9. Appareil à plateau pour réaliser une mesure XRD d'une batterie de la revendication 7,
dans lequel des trous d'alignement (411) sont formés dans le plateau de base (410) passant à travers celui-ci, et
les trous d'alignement (411) sont prévus de manière plurielle.

10. Appareil à plateau pour réaliser une mesure XRD d'une batterie de la revendication 7,
dans lequel le plateau de fixation (430) comprend :
un premier plateau de fixation (431) couplé au plateau de base (410) en parallèle avec la première direction ; et
un deuxième plateau de fixation (433) couplé au plateau de base (410) perpendiculairement à la première direction, et
dans lequel la barre de guidage (310) est fixée sur le premier plateau de fixation (431), et
l'unité d'entraînement (200) est fixée sur le deuxième plateau de fixation (433).

11. Appareil à plateau pour réaliser une mesure XRD d'une batterie de la revendication 10,
dans lequel l'unité d'entraînement (200) est fixée à une face du deuxième plateau de fixation (433),
le plateau de placement (100) est localisé sur l'autre face du deuxième plateau de fixation (433) à l'opposé de cette une face du deuxième plateau de fixation (433), et
l'unité d'entraînement (200) transmet la puissance d'entraînement au plateau de placement (100) à travers une ouverture formée dans le deuxième plateau de fixation (433).
